# EUROPÄISCHE PATENTSCHRIFT

(11) **EP 1 644 217 B1**
(45) Veröffentlichungstag und Bekanntmachung des Hinweises auf die Patenterteilung: **02.06.2010**
(21) Anmeldenummer: 04740240.9
(22) Anmeldetag: 24.06.2004
(51) Int. Cl.: B60N 2/44

(54) **KRAFTFAHRZEUGSITZ**
MOTOR VEHICLE SEAT
SIEGE D'AUTOMOBILE

(30) Priorität: 27.06.2003 DE 20309985 U
(43) Veröffentlichungstag der Anmeldung: 12.04.2006
(73) Patentinhaber: Buhr, Michael, 53127 Bonn (DE); Siekmann, Werner, 22529 Hamburg (DE)
(72) Erfinder: Buhr, Michael, 53127 Bonn (DE)
(74) Vertreter: Müller, Thomas Michael
(86) Internationale Anmeldenummer: PCT/EP2004/006825
(87) Internationale Veröffentlichungsnummer: WO 2005/000628

(56) Entgegenhaltungen:
- EP-A- 0 229 737
- EP-A- 0 670 238
- DE-C- 19 737 271
- DE-U- 29 707 205
- FR-A- 2 768 243
- FR-A- 2 823 475
- US-A- 4 500 130
- US-A- 5 441 331
- US-A- 5 544 939
- US-A1- 2002 089 220

## Beschreibung

Die Erfindung bezieht sich auf einen Kraftfahrzeugsitz für den Fahrer eines Kraftfahrzeuges, der eine gepolsterte Rückenlehne und einen eine Sitzfläche aufweisenden gepolsterten Sitz mit einem über die Sitzfläche nach oben vorragenden randseitigen Stützteil umfasst.

Ein solcher Sitz ist aus der dem Oberbegriff entsprechenden FR 2 768 243 A bekannt, dessen jeweiliges Stützteil ein vom Sitz separat aufsetzbares Bauteil darstellt. Die seitlichen Stützteile sind hierbei außerhalb der Sitzfläche angeordnet und können um horizontale Achsen verschwenkt werden. Sie begrenzen beidseitig die Sitzfläche, so dass der Kraftfahrer auf der Sitzfläche auch seitlich Halt findet, ohne dass aber auf den anliegenden O-berschenkeln ein Drehmoment aufgeübt werden kann, und zwar weder ein Drehmoment um die geometrische Achse des Oberschenkels noch um die geometrische Achse seiner Wirbelsäule.

Durch die übliche Sitzposition des Kraftfahrers im Fahrzeug kommt es zu einer Außenrotation des rechten Oberschenkels, der also nach rechts außen bei in Deutschland üblichen Fahrzeugen fällt. Dies führt nicht nur zu Beschwerden im Hüftgelenk, sondern auch zu Verspannungen im Oberschenkel, Hüft-Becken- und Lendenwirbelsäulenbereich. Auch kann es zu Schmerzen am Bein und zur Behinderung der Blutzirkulation kommen, wenn der Oberschenkel gar an die Mittelkonsole des Fahrzeugs heran gelangt. Schließlich treten Verkrampfungen im Rücken und statische Beschwerden im Lenden-Becken-Hüftbereich auf. Im Endeffekt führt dies zur Ermüdung des Kraftfahrers und diese Art der Ermüdung ist unter Umständen eine Mitursache des so genannten Sekundenschlafes.

Es sind Kraftfahrzeugsitze mit einer gepolsterten Rückenlehne, einem gepolsterten Sitz und randständiger Überhöhung der Sitzfläche in Form eines Stützteils bekannt (EP 0 670 238 A1, US-A-4 500 130, US 2002/0089220 A1), jedoch ist dort die Problematik der Außenrotation nicht einmal ansatzweise erkannt worden.

Aufgabe der Erfindung ist die Vermeidung der Außenrotation des Oberschenkels des beim Fahren aktiven Beines des Fahrers.

Die Aufgabe wird gelöst durch einen eingangs genannten Kraftfahrzeugsitz, dadurch gekennzeichnet, daß ein einziges Stützteil vorgesehen ist,
- das in den Sitz und die Polsterung integriert ist,
- an einem dem zur Betätigung des Gas- und Bremspedals des Kraftfahrzeuges dienenden Bein des Fahrers nahen Rand auf der Sitzfläche des Sitzes angeordnet ist,
- in dem vorderen, dem Knie des Fahrers nahen Bereich des Sitzes, einer Außenrotation des Oberschenkels des Fahrers entgegenwirkend, angeordnet ist, und
- eine von vorn her nach hinten sich verjüngende Gestalt aufweist.

Durch die vorliegende Erfindung kann eine nach außen gerichtete gemischte Bewegung des Oberschenkels des aktiven Beines des Kraftfahrers verhindert werden, indem ein aus zwei Komponenten gebildetes Drehmoment auf den Oberschenkel einwirken kann, nämlich einerseits eine Drehbewegung um die im Wesentlichen vertikale geometrische Achse der Wirbelsäule und andererseits eine Drehbewegung um die im Wesentlichen waagerechte geometrische Achse des Oberschenkels des Kraftfahrers. Durch randständige Überhöhungen der Sitzfläche oder durch seitliche verschwenkbare Seitenteile an der Sitzfläche können diese Wirkungen nicht erzielt werden.

Die Erfindung wird nachstehend anhand der Zeichnungen beispielsweise erläutert.

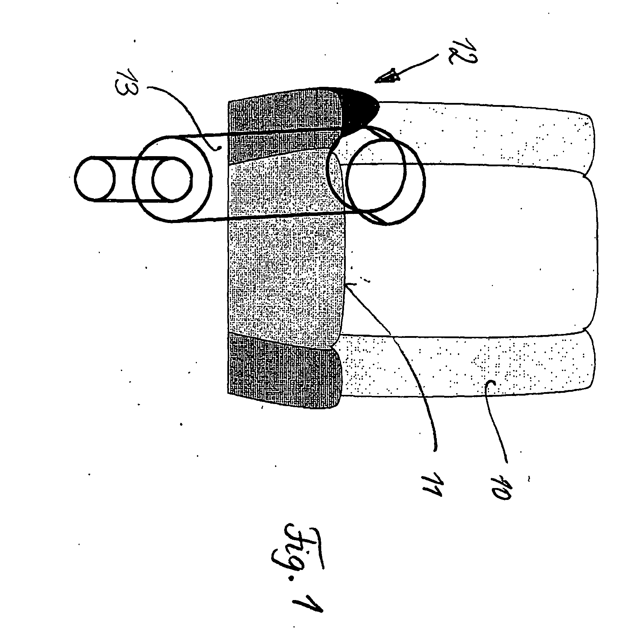

Fig. 1 zeigt eine Vorderansicht eines Kraftfahrzeugsitzes.
Fig. 2 zeigt eine Draufsicht auf den in Fig. 1 gezeigten Kraftfahrzeugsitz.

In den Figuren ist mit 10 die Rückenlehne eines Kraftfahrzeugsitzes bezeichnet. Der eigentliche Sitz weist eine Sitzfläche 11 auf.

Derartige Sitze sind hinlänglich bekannt, wobei in den Figuren an eine Dreiteilung der Rückenlehne 10 und des eigentlichen Sitzes 11 gezeigt ist, so wie dies häufig bei Kraftfahrzeugsitzen angetroffen werden kann.

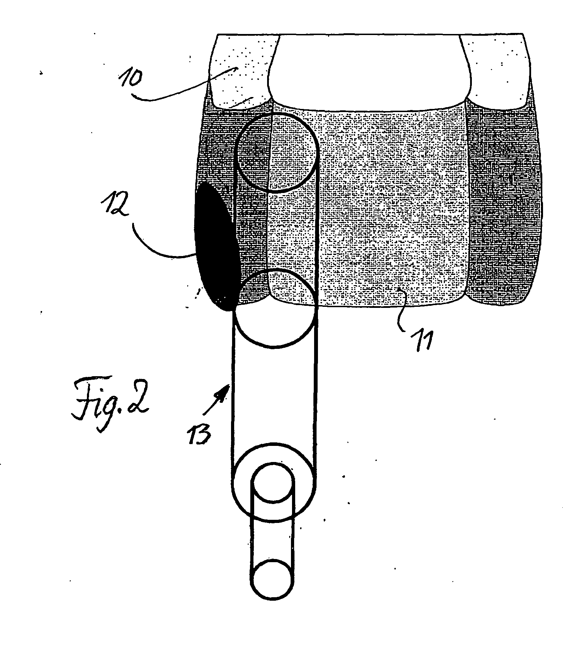

Mit 12 ist in den Figuren ein Stützteil bezeichnet, der an der rechtsseitigen Begrenzung (vom Kraftfahrer aus gesehen) der Sitzfläche 11 angebracht ist. Er hat im Querschnitt eine im Wesentlichen dreieckige Form, allerdings mit Abrundungen. Aus der Blickrichtung von oben her (Fig. 2) hat er im Wesentlichen Nierenform, d. h., von der Kante der Fläche 11 her nach hinten hin, zur Rückenlehne hin, verjüngt er sich.

Mit 13 sind als zylindrische Teile Ober- und Unterschenkel sowie der Fußbereich einer an sich nicht gezeigten Person bezeichnet. Diese Art der Darstellung lässt erkennen, insbesondere bei Betrachtung der Fig. 2, dass die gefürchtete Außenrotation des Oberschenkel des Fahrers nicht auftreten kann, stattdessen bleiben Oberschenkel und Unterschenkel in ausgerichteter Lage zueinander.

Die in den Figuren gezeigte Ausführungsform des Kraftfahrzeugsitzes ist für einen Personenkraftwagen gedacht, bei dem der Fahrer an der linken Seite des Fahrzeuges sitzt und mit seinem rechten Fuß Brems- und Gaspedal und betätigt.

An der der Längsachse des Kraftfahrzeuges näheren Seite des Fahrersitzes ist im mittleren bis vorderen Bereich der Sitzfläche eine randständige Überhöhung vorgesehen, die nach vorn und hinten ausläuft und so die Außenrotation des Oberschenkels des Fahrers reduziert bzw. verhindert. Diese Rotationsstütze kann variabel ausgestaltet sein (mechanisch, pneumatisch, hydraulisch oder elektrisch verstellbar), um so die Beinstellung zu variieren und eine Anpassung an anatomische Unterschiede zwischen den einzelnen Kraftfahrern zu ermöglichen.

## Patentansprüche

1. Kraftfahrzeugsitz für den Fahrer eines Kraftfahrzeuges, der eine gepolsterte Rückenlehne (10) und einen eine Sitzfläche (11) aufweisenden gepolsterten Sitz mit einem über die Sitzfläche (11) nach oben vorragenden randseitigen Stützteil (12) umfasst,
**dadurch gekennzeichnet,**
**dass** ein einziges Stützteil (12) vorgesehen ist,
- das in den Sitz und die Polsterung integriert ist,
- an einem dem zur Betätigung des Gas- und Bremspedals des Kraftfahrzeuges dienenden Bein des Fahrers nahen Rand auf der Sitzfläche (11) des Sitzes angeordnet ist,
- in dem vorderen, dem Knie des Fahrers nahen Bereich des Sitzes, einer Außenrotation des Oberschenkels (13) des Fahrers entgegenwirkend, angeordnet ist, und
- eine von vorn her nach hinten sich verjüngende Gestalt aufweist.

2. Kraftfahrzeugsitz nach Anspruch 1,
**dadurch gekennzeichnet,**
**dass** das Stützteil (12) in seinen Außenabmessungen verstellbar ausgebildet ist.

## Claims

1. Motor vehicle seat for the driver of a motor vehicle, which comprises a padded backrest (10) and a padded seat, having a seat surface (11), and with an edge-sided support element (12) projecting beyond the seat surface upwards, **characterised in**
**that** a single support element (12) is provided,
- which is integrated into the seat and the padding,
- which is arranged at an edge, close to the leg of the driver, which serves for actuating the gas- and brake pedal of the motor vehicle, on the seat surface (11) of the seat,
- which is arranged in the front portion of the seat close to the knee of the driver, acting against the outwards rotation of the thigh (13) of the driver, and
- which has a shape which is tapered from the front towards the rear.

2. Motor vehicle seat according to claim 1,
**characterised in**
**that** the support element (12) is formed adjustably in its outer dimensions.

## Revendications

1. Siège d'automobile pour le conducteur d'un véhicule automobile, qui comprend un dossier (10) rembourré présentant une assise (11) avec une partie de soutien (12) côté bordure dépassant de l'assise (11) vers le haut,
**caractérisé en ce que**
il est prévu une unique partie de soutien (12),
- qui est intégré dans le siège et le rembourrage,
- est disposé sur l'assise (11) du siège sur un bord proche de la jambe du conducteur servant à l'actionnement de la pédale de frein et de la pédale d'accélérateur du véhicule automobile,
- est disposé dans la zone avant, proche du genou du conducteur, du siège, en s'opposant à l'action d'une rotation externe de la cuisse (13) du conducteur, et
- présente une forme qui se rétrécit de l'avant vers l'arrière.

2. Siège d'automobile selon la revendication 1, **caractérisé en ce que** la partie de soutien (12) est conçue de façon réglable dans ses dimensions extérieures.
